# EUROPEAN PATENT APPLICATION

(11) **EP 4 797 334 A1**
(43) Date of publication of application: **26.08.2026**
(21) Application number: 25159695.3
(22) Date of filing: 24.02.2025
(51) Int. Cl.: H01M 4/04, H01M 4/139, H01M 10/058

(54) **BATTERY MANUFACTURING APPARATUS AND METHOD BATTERY MATERIAL**

(71) Applicant: LG Energy Solution, Ltd., Seoul 07335 (KR)
(72) Inventor: LEE, Gyu Sun, 34122 Daejeon (KR); HONG, Jong Hyuk, 34122 Daejeon (KR); CHOI, Jin Hyeong, 34122 Daejeon (KR)
(74) Representative: Goddar, Heinz J.

(57) **Abstract**

Disclosed is an apparatus, a battery manufacturing system, a battery manufacturing method and a battery product. The apparatus comprises a receptacle configured to receive a battery material and a gas withdrawal system configured to withdraw a gas from the battery material.

## Description

### TECHNICAL FIELD

The present invention generally relates to the field of battery technology. The present invention relates to a battery manufacturing apparatus and a battery manufacturing method, and also to a battery manufactured accordingly.

### BACKGROUND ART

A battery generally refers to a chemical energy storage device capable of storing and providing electrical energy through electrochemical reactions. A battery may generally comprise one or more positive electrodes (i.e., cathodes), one or more negative electrodes (i.e., anodes), and an electrolyte that facilitates ion movement between the electrodes.

Batteries may be classified into primary batteries and secondary batteries. Primary batteries, e.g., alkaline batteries, provide the stored electrochemical energy and are usually discarded after depletion of the stored electrochemical energy. As such, primary batteries are often referred to as non-rechargeable batteries.

Secondary batteries may also be referred to as rechargeable batteries, storage batteries or accumulators (in a broader sense). Secondary batteries may store and provide electrochemical energy (and thereby become discharged) and (re-)charged multiple times. For example, secondary batteries may be or include lithium-ion batteries, lead-acid batteries, nickel-cadmium (NiCd) batteries, nickel-iron (NiFe) batteries, nickel-metal hydride (Ni-MH) batteries, lithium-ion polymer (LiPo) batteries.

Manufacturing a battery typically includes preparing a material composition for each of the positive electrode and the negative electrode. For this purpose, a battery material is prepared that contains solid components and one or more liquid components including a solvent. A paste-like mixture resulting from merging the components of the battery material may be referred to as a slurry. Such a slurry may be applied (deposited) onto a substrate, particularly a metal current collector sheet, to manufacture an electrode for the battery.

At times, gas bubbles may be included or may emerge in the battery material during the preparation of the battery material. Such gas bubbles may give rise to material and density irregularities on the surface and/or inside the deposited battery material. As such, gas bubbles in the battery material may be undesirable for the manufacturing of a battery.

### SUMMARY

It is an object to overcome the problems known from the prior art.

The present invention is defined according to the subject-matter of the appended independent claim(s). Particular embodiments may be given by the additional features of the appended dependent claims.

An apparatus may comprise a receptacle configured to receive a battery material. The apparatus may comprise a gas withdrawal system configured to withdraw (a) gas from the received battery material.

The apparatus as disclosed herein may refer to a device or (a part of) a system specifically configured to manufacture a battery. The apparatus as disclosed herein may be referred to as a battery manufacturing apparatus or a battery manufacturing system. Additionally or alternatively, the apparatus may be a part of a battery manufacturing system. Particularly, the apparatus as disclosed herein may be implemented in a plant that may be partly or fully automated (i.e., automated plant), a smart factory or the like.

The battery as used herein may generally refer to a chemical energy storage device. In particular, the battery as used herein may refer to a primary battery and/or a secondary battery. Unless indicated otherwise or technically inappropriate, the battery may generally refer to any arrangement or packaging type of one or more batteries. In particular, the battery may refer to a battery cell, a battery module or a battery pack, or any other battery arrangement or packaging type unless indicated otherwise or technically inappropriate. Further, the battery as referred to herein is not limited to any specific type of battery cell, and may be or include a coin-type battery cell, a pouch-type battery cell, a cylindrical battery cell, a prismatic battery cell or any combination thereof.

A battery cell as used herein may refer to an electrochemical unit configured to convert chemical energy into electrical energy, the process of which may be referred to as discharging. In a secondary battery, the battery cell may also be configured to convert electrical energy into chemical energy, the process of which may be referred to as (re-)charging. The battery cell may include one or more positive electrodes and one or more negative electrodes, each provided as the respective battery material being deposited on a respective substrate. The substrate may be provided as a conductive sheet, for example made of a metal, such as aluminum or copper. The substrate may also be referred to as a current collector. The electrodes of opposite polarities may be (physically and/or electrically) separated from one another by one or more separator. The battery cell may further comprise an electrolyte configured to enable charge carriers (e.g., ions) to migrate between the electrodes.

An electrode may refer to a component of a battery that stores and releases charge carriers and provides electrical connections to the outside of the battery. Generally, the electrode may refer to a positive electrode (cathode) or a negative electrode (anode). One or more positive electrodes and one or more negative electrodes, together with one or more separators that physically and electrically separate the electrodes of different polarities from one another, may form an electrode assembly. The electrode assembly may be dimensioned and sized according to a specific application, for example for a coin-type battery cell, a pouch-type battery cell, a prismatic battery cell and a cylindrical battery cell.

A battery material composition as used herein may refer to a specific combination of materials used for manufacturing a battery. Specifically, the battery material may be configured for manufacturing an electrode of a battery. The battery material as used herein is not limited to a particular polarity, and may be applicable for a positive electrode (cathode) or a negative electrode (anode), unless indicated otherwise or technically inappropriate. The battery material may include one or more of: an active material, a conductive agent, a binder and a solvent. The battery material may further comprise one or more additives.

The active material may be composed according to a polarity of the electrode to be manufactured, i.e., either for a positive electrode (cathode) or a negative electrode (anode). Particularly, the active material may contribute to storing and releasing charge carriers such as electrons and ions. The term active material is used herein without any specific limitation of material. For example, the active material for a positive electrode be or include lithium cobalt oxide (LiCoO2), lithium iron phosphate (LFP, LiFePO4), lithium manganese oxide (LiMn2O4), lithium nickel manganese cobalt oxide (NMC, LiNiMnCoO2) and/or lithium nickel cobalt aluminum oxide (NCA, LiNiCoAlO2). For example, the active material for a negative electrode may be or include graphite, silicon and/or lithium titanate (Li₄Ti₅O₁₂).

The conductive agent may be configured for increasing an electrical conductivity of the battery material. For example, the conductive agent may be or include carbon black, graphene and/or carbon nanotubes.

The binder may be configured for holding or drawing components of the battery material together to form a cohesive whole mechanically, chemically, by adhesion or cohesion. For example, the binder may be or include polyvinylidene fluoride (PVDF), styrene-butadiene rubber (SBR) and/or carboxymethyl cellulose (CMC).

The solvent may be configured to disperse the other components of the battery material. For example, the solvent may be or include N-methyl-2-pyrrolidone (NMP), water and/or ethanol.

A battery material including solvent may also be referred to as a slurry. The battery material may also be referred to herein as a (material) mixture or a material composition for an electrode or for a battery, depending on the context.

The receptacle may be configured to receive a battery material. Additionally or alternatively, the receptacle may be configured to contain, retain, hold and/or maintain, collectively referred to as "contain" hereinafter, the battery material in a fluid-tight manner. In specific examples, the receptacle may be configured to contain and/or process the battery material inside. The receptacle may be configured to contain the battery material while performing one or more battery manufacturing processes, for example during at least one of a mixing process, a gas withdrawal process and a battery material deposition process. In specific examples, the receptacle may refer to a reactor or a reactor chamber configured to contain and mix the battery material. In specific examples, the receptacle may be or comprise a metal bowl, a container, a mixing tank, a supply tank, a transport tank, a holder, a chamber, a compartment or the like.

The receptacle may have a general shape that is rotationally symmetrical with respect to an axis (i.e., may generally have a cylindrical symmetry). The receptacle may comprise a lateral sidewall, an upper cover and a bottom that are either fluid-tightly joint together and/or at least partially provided integrally. The lateral sidewall, the upper cover and/or the bottom of the receptacle each may be a rigid and fluid-tight component. The receptacle may have a lateral sidewall, or a shell, that has a hollow-cylindrical shape, for example around the axis mentioned above. The receptacle may have an upper cover, or a lid, which may be flat, or may have a generally convex shape (i.e., having an outward curvature) or a combination of multiple geometrical shapes. The receptacle may have a bottom which may be provided as a flat plate, or have a generally convex shape (i.e., having an outward curvature) or a combination of multiple geometrical shapes.

The receptacle may comprise one or more feedthroughs, ports and/or openings, collectively referred to herein as feedthroughs, that is/are arranged for inserting the battery material or components of the battery material into the receptacle and/or for discharging the battery material from the receptacle. The one or more feedthroughs may be formed in the upper cover, the lateral sidewall and/or the bottom of the receptacle for the respective purposes. In specific examples, the receptacle may comprise one or more feedthroughs fluidly connected to (a part of) the gas withdrawal system so as to enable gas from the battery material to be withdrawn by the gas withdrawal system. The receptacle may be made of a rigid material, such as a metal, particularly a steel or steel alloy.

The gas withdrawal system as used herein may be configured to withdraw gas from the battery material, in particular by means of applying vibration to the receptacle and/or by suction of the gas from the receptacle. Specifically, the gas withdrawal system as used herein may be configured to apply vibration to the receptacle. The gas withdrawal system may be configured to subject the receptacle to vibration. Alternatively or additionally, the gas withdrawal system may be configured to discharge gas from the receptacle, and particularly from the battery material received in the receptacle. The gas withdrawal system may be configured to subject an inside of the receptacle to a negative pressure. The gas withdrawal system may further comprise any, some, or all of the additional features as disclosed herein in connection with the gas withdrawal system.

In some examples, the gas withdrawal system may be configured to apply vibration to the receptacle by applying a mechanical impact to a lower area of the receptacle. In some examples, the gas withdrawal system may be configured to apply vibration to the receptacle by applying a mechanical impact to multiple distinct spots at the receptacle. In specific examples, the gas withdrawal system may be configured to mechanically and/or physically strike against the receptacle, particularly against a rigid body and/or a rigid portion of the receptacle. Furthermore, the gas withdrawal system may be configured to mechanically and/or physically strike against the receptacle, particularly against a rigid body and/or a rigid portion of the receptacle, in a repeated manner so as to apply vibration of a specific frequency. The gas withdrawal system may be configured to mechanically and/or physically strike against the receptacle, particularly against a rigid body and/or a rigid portion of the receptacle, with a frequency of, for example, 10 to 10.000 Hz, or 20 to 1.000 Hz, or 50 to 500 Hz.

Herein, the gas as used herein, and the gas withdrawn from the battery material may be or include ambient air or ambient gas enclosed in the battery material during the preparation of the battery material. Additionally or alternatively, the gas withdrawn from the battery material may be or include gas escaping (e.g., evaporating, leaking or exhaled) from the battery material during the preparation of the battery material. For example, the gas withdrawn from the battery material may emerge at least partly from a physical process and/or a chemical process occurring in the battery material during the preparation. In particular, the gas may refer to gas pockets (bubbles) enclosed in the battery material.

Herein, withdrawing gas from the battery material may refer to, or include, separating the gas as mentioned above from the battery material. Additionally or alternatively, withdrawing gas from the battery material may refer to, or include, separating the gas as mentioned above from the receptacle. Specifically, withdrawing gas from the battery material may include causing the gas as mentioned above to ascend from within the battery material by means of vibration applied to the receptacle. Alternatively or additionally, withdrawing gas from the battery material may include removing the gas as mentioned above from the battery material and/or from the receptacle.

The apparatus as disclosed herein may increase the efficacy of withdrawing the gas that is enclosed in and/or escaping from the battery material received in the apparatus, specifically in the receptacle of the apparatus. Accordingly, the apparatus as disclosed herein may contribute to increasing the quality of a battery product manufactured using the apparatus. The same applies to a battery manufacturing method as disclosed herein and a battery manufactured using the apparatus as disclosed herein and/or according to the battery manufacturing method as disclosed herein.

In some examples, the gas withdrawal system may comprise a vibration device configured to subject the receptacle to vibration. The vibration device may be operable to generate vibration and configured to induce the vibration to the receptacle. The vibration device may be, or may be configured to be, mechanically coupled to the receptacle. In addition, the vibration device may comprise any, some, or all of the additional features disclosed herein in connection with the vibration device.

Alternatively or additionally, the gas withdrawal system may comprise a negative pressure device configured to apply a negative pressure to an inside of the receptacle. Specifically, the negative pressure device may comprise a pump, a vacuum pump, a blower, a suction device, a compressor, or any other machine suitable for generating a negative pressure. In addition, the negative pressure device may be fluidly coupled to the receptacle, for example via one or more feedthroughs as mentioned above. The negative pressure device may be configured to apply the negative pressure to the inside of the receptacle so that the gas escaping the battery material is withdrawn from the receptacle. In some examples, the negative pressure device may comprise a vacuum pump fluidly coupled to the receptacle. The vacuum pump may be configured to generate a negative pressure relative to the inside of the receptacle. The gas withdrawal system may be configured to apply the negative pressure to the inside of the receptacle. For example, the negative pressure may between 10⁻¹ and 10⁻⁶ bar, or between 10⁻² and 10⁻⁶ bar, or between 10⁻¹ and 10⁻⁵ bar.

Subjecting the receptacle to vibration may facilitate gas bubbles (gas pockets) enclosed in the battery material to ascend to a surface of the battery material and thus promote the escape of the gas from the battery material. Further, applying a negative pressure to the receptacle may promote the escape of the gas from the battery material.

In specific examples, the gas withdrawal system may comprise both the vibration device and the negative pressure device, thereby increasing the efficacy of withdrawing gas from the battery material from within the receptacle in a synergistic manner.

In some examples, the vibration device may be configured to convert electrical power into mechanical vibration, which may be applied to the receptacle. Specifically, the vibration device may be configured to receive electrical power and convert the electrical power into mechanical vibration and to apply the mechanical vibration to the receptacle. The vibration device may comprise an actuator (or a vibrator) operable to mechanically generate vibration. For example, the vibration device may comprise one or more of an eccentric rotating mass motor, a linear resonant actuator, a piezoelectric actuator, a sonotrode actuator, a solenoid vibrator, an electromagnetic shaker, a pneumatic vibrator, an unbalanced rotary-electric actuator or any other machine that is suitable for generating and applying vibration to the receptacle.

In some examples, the gas withdrawal system, particularly the vibration device, may be configured to apply a/the vibration to the receptacle with a frequency in a range of 10 to 10.000 Hz, or 20 to 1.000 Hz, or 50 to 500 Hz. The vibration may be applied in the manner as described herein.

In some examples, the gas withdrawal system, and particularly the vibration device, may be configured to apply vibration to the receptacle by applying a mechanical impact to a lower area (that is, relatively close to the bottom) of the receptacle. Here, the lower area of the receptacle may refer to a height range of 0 to 50%, or 0 to 30%, or 0 to 15%, of a total height of the receptacle, starting from a lowermost extension of the receptacle. Herein, the height may be determined in a direction parallel to the gravitational pull. Alternatively or additionally the height may be determined in a direction parallel to a symmetrical axis of the receptacle, provided that the receptacle has a general axisymmetrical shape, as described above, with respect to said symmetrical axis. The total height of the receptacle may be determined linearly between the lowermost extension and an uppermost extension of the receptacle with respect to the direction along which the height is determined.

The vibration device may be configured to apply vibration to the receptacle by applying a mechanical impact to the receptacle from the outside or from the inside of the receptacle. In other words, the vibration device may be arranged (at least partly) outside of the receptacle, or (at least partly) inside the receptacle. In specific examples, the vibration device may be arranged entirely outside of the receptacle and may be configured to apply vibration to the receptacle by applying a mechanical impact to the receptacle from the outside. In other examples, the vibration device may be at least partly arranged inside the receptacle, for example in the area where the battery material is received and/or within a rigid part of the receptacle.

In some examples, the gas withdrawal system or the vibration device may comprise one striking element or multiple striking elements (each) configured to physically and mechanically strike against the receptacle, thereby applying vibration, and/or a mechanical impact, to the receptacle. The striking element may be made of a rigid material, for example metal, particularly steel or steel-alloy, configured to physically and mechanically strike against a rigid body and/or rigid part of the receptacle. In particular, the striking element may be configured strike against a rigid body and/or a rigid part of the receptacle. In specific examples, the striking element may be configured to apply a mechanical vibration with a frequency of 10 to 10.000 Hz, or 20 to 1.000 Hz, or 50 to 500 Hz.

The vibration device may be configured to apply a mechanical impact to a single position at the receptacle using the striking element. In some examples, the vibration device may comprise multiple striking elements each configured to apply a mechanical impact to the receptacle. The multiple striking elements may be configured to apply vibrations to the receptacle with a uniform frequency (i.e., one frequency for all or some of the multiple striking elements) or with various frequencies. The multiple striking elements may be arranged separate from one another to apply mechanical impacts at multiple distinct positions of the receptacle. In specific examples, the multiple striking elements may be arranged separately around the receptacle. For example, two striking elements may be arranged on opposite sides of the receptacle. In other examples, three, four, five or six striking elements may be arranged in an equidistant manner around the receptacle. In further examples, any natural number between 7 and 24 striking elements may be arranged in an equidistant manner around the receptacle. Any, some, or all of the striking elements may be each configured to apply vibration to the receptacle by applying a mechanical impact to the lower area of the receptacle as described above.

In some examples, the negative pressure device may comprise a vacuum pump configured to generate a negative pressure and fluidly coupled to the receptacle. Additionally or alternatively, the negative pressure device, particularly its vacuum pump, may be configured to apply a negative pressure to the receptacle so that gas, particularly from the battery material received in the receptacle, is removed from the receptacle. Herein, the negative pressure may refer to a condition where the pressure in a given space is lower than the surrounding atmospheric pressure and/or lower than inside the receptacle. The negative pressure device may be configured to create a pressure differential that causes the gas as mentioned above to be withdrawn from the receptacle. In specific examples, the negative pressure device may be configured to create a pressure differential of 1 bar to 10 bar, or 1.5 bar to 8 bar, or 2 bar to 6 bar relative to the inside of the receptacle to withdraw the gas from the receptacle and from thee battery material received in the receptacle.

In some examples, the apparatus may further comprise a mixing device configured to mix the battery material received in the receptacle. The mixing device may be configured to receive and process the battery material that comprises one or more of an electrode active material, a conductive agent, a binder and a solvent. In particular, the mixing device may be operable to mechanically process the battery material in the receptacle. The mixing device may be configured to stir, shake, blend, or otherwise mechanically process the battery material. The mixing device may be configured to prepare a mixture of the components of the battery material that is homogeneous as possible.

As described above, the battery material may comprise multiple components (to be) mixed together. In particular, the components of the battery material may be of different phases, such as a solid phase and a liquid phase. In specific examples, putting together the components of the battery material in the receptacle may not suffice to obtain a mixture of satisfactory homogeneity. The battery material may be subjected to a mixing process to obtain a target degree of homogeneity.

In some examples, the mixing device may comprise a stirrer configured to move the battery material relative to the receptacle. In specific examples, the mixing device may comprise a shaft arranged in the receptacle and configured to rotate along an axis. The mixing device may comprise one or more blades (vanes) attached to the shaft and configured to stir the battery material as the shaft rotates. Alternatively or additionally, the stirrer may be configured to mechanically agitate the components of the battery material so as to form a homogeneous mixture.

Additionally or alternatively, the mixing device may comprise a drive configured to move the receptacle, in particular relative to the battery material. For example, the receptacle may be moved around a rotation axis, and the battery material received in the receptacle may also be set in motion by friction with an inner surface of the receptacle. In some examples, the mixing device may comprise multiple drives that are each configured to rotate around their own rotational axis, creating complex motion patterns of the receptacle. For example, multiple drives may be configured to create a tumbling motion rotating around multiple, non-colinear rotational axes.

In some examples, the apparatus as disclosed herein may be configured to receive and process the battery material that comprises one or more of a cathode active material, an anode active material, a conductive agent, a binder, and a solvent. These components of the battery material may be as described in detail above. The apparatus as disclosed herein may be specifically arranged for manufacturing an electrode of a battery. In particular, the apparatus as disclosed herein may form part of manufacturing a positive electrode of a battery. Alternatively, the apparatus as disclosed herein may form part of manufacturing a negative electrode of a battery.

In some examples, the apparatus may further comprise a deposition unit configured to deposit the battery material on a current collector for the battery electrode; and solvent withdrawing means configured to withdraw the solvent from the deposited battery material.

According to an aspect of the present invention, a battery manufacturing system may comprise the apparatus as disclosed herein. The battery manufacturing system may further comprise a deposition unit and a solvent withdrawal unit. The battery manufacturing system may be, or be a part of, a (larger) battery manufacturing system that may be implemented entirely in once place (such as in a plant) or implemented in a dedicated manner (such as a combination of one or more suppliers and a final product manufacturer). As mentioned above, the battery manufacturing system may be implemented in a partly or fully automated plant, for example in a smart factory.

The deposition device may be configured to deposit the battery material on a substrate. In particular, the deposition device may comprise an extrusion deposition device, which may be also referred to as a slot die, that is configured to receive the battery material in a manifold and to press the battery material through a slit-shaped opening that has a smaller cross-section than the manifold. In other examples, the deposition device may comprise a spray nozzle, a doctor blade and/or a calender each configured to deposit the battery material from the receptacle on the substrate.

The substrate may generally refer to any rigid support onto which the battery material can be deposited. Specifically, the substrate may be or comprise a metal sheet, for example made of steel, aluminum or copper, that may serve as a current collector of an electrode of a battery.

The solvent withdrawal unit may be configured to withdraw the solvent from the battery material deposited on the substrate, for example by applying heat and/or gas flow (i.e., convection), by controlling ambient humidity and/or by controlling ambient pressure. The solvent withdrawal unit may comprise a drying oven and/or a hot air blower.

The drying oven may be configured to apply heat and a relatively low humidity to the battery material. In particular, the drying oven may be configured to apply a temperature in the range above or near an evaporation temperature of the solvent of the battery material. For example, the drying oven may be configured to apply a temperature of 78° C or above, when ethanol is used as the solvent. The drying oven may be configured to apply a temperature of 100° C or above, when water is used as the solvent. The drying oven may be configured to apply a temperature of 202° C or above, when N-methyl-2-pyrrolidone (NMP) is used as the solvent.

According to an aspect of the present invention, a method may comprise receiving a battery material in a receptacle; and withdrawing gas from the battery material received in the receptacle by subjecting the receptacle to vibration and/or by applying a negative pressure to the receptacle.

The method as disclosed herein may be referred to as a battery manufacturing method. The features and specifics as described herein with reference to the apparatus and battery manufacturing system may also apply to the method. In particular, the battery material, the receptacle and the gas as recited in the method may be as described herein with reference to the apparatus and battery manufacturing system. The subjecting the receptacle to vibration and the applying a negative pressure to the receptacle may be each as described herein with reference to the apparatus and battery manufacturing system. The technical effect and the technical problem to be solved described with reference to the apparatus and battery manufacturing system may also apply to the method as disclosed herein.

In particular, the method may be performed using the apparatus or the battery manufacturing system as disclosed herein.

In some examples, the step of withdrawing the gas from the battery material may be performed while mechanically processing the battery material in the receptacle. In particular, the mechanical(-ly) processing of the battery material may refer to the mixing process of the battery material as described herein. In specific examples, gas may be withdrawn from the battery material received in the receptacle and/or from the receptacle at the same time as the battery material is being processed, e.g., being mixed. Accordingly, the processing time may be reduced while increasing the quality of a battery to be manufactured.

Alternatively or additionally, the step of withdrawing the gas from the battery material may be performed intermittently while mechanically processing the battery material in the receptacle. In other words, the mechanical processing of the battery material in the receptacle may be stopped in order to perform the withdrawal of gas from the battery material received in the receptacle. Then the withdrawal of gas from the battery material received in the receptacle may be stopped and the mechanical processing of the battery material may be continued. Accordingly, the mechanical processing of the battery material in the receptacle and the withdrawal of gas from the battery material received in the receptacle may be performed in an alternating manner. This may ensure that the method steps be performed in a safe and distinct manner.

The present invention further relates to an electrode, obtainable by the battery manufacturing method as disclosed herein, for use in a battery.

The present invention further relates to a battery, which may be a battery cell, comprising an electrode obtainable by the battery manufacturing method as disclosed herein.

### ADVANTAGEOUS EFFECTS

According to the various embodiments of the apparatus described above, it is possible to manufacture a battery having an increased homogeneity and thus increased density of the battery material. This may increase the energy density of the battery as well as the quality thereof, and thereby may contribute to decreasing the cost for manufacturing the battery.

### BRIEF DESCRIPTION OF DRAWINGS

The accompanying drawings illustrate particular examples of the present disclosure and, together with the detailed description of the present disclosure described below, serve to provide a further understanding of the technical aspects of the present disclosure. However, the present invention should not be understood as being limited to the examples shown in the drawings and described below. The accompanying drawings are to be regarded as being schematic representations, and elements illustrated in the drawings are not necessarily shown to scale. Rather, the various elements are represented such that their function and general purpose become apparent to a person skilled in the art. Same or similar reference signs in the drawings designate same or similar elements and repetitive descriptions are omitted.
FIG. 1 shows a schematic cross-sectional view of an apparatus according to an example.
FIG. 2 shows a schematic cross-sectional view of an apparatus according to an example.
FIG. 3 shows a schematic cross-sectional view of an apparatus according to a further example
FIG. 4 shows a schematic plan view of an apparatus 100 according to a further example.
FIG. 5 shows a battery manufacturing system according to an example.
FIG. 6 shows a flow diagram of a battery manufacturing method according to an example.

### DETAILED DESCRIPTIONS OF DRAWINGS

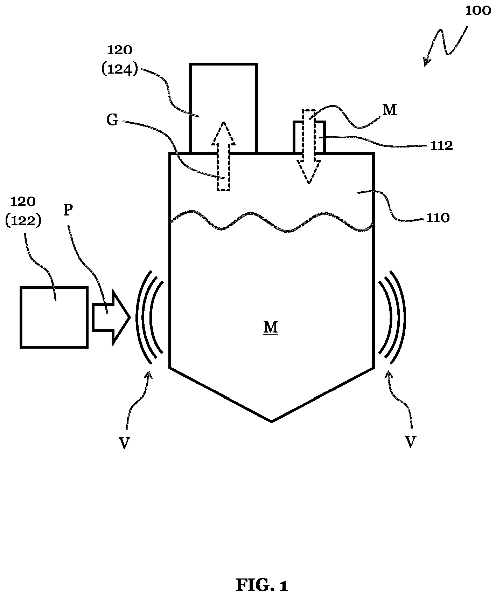

FIG. 1 shows a schematic cross-sectional view of an apparatus 100 according to an example. The apparatus 100 comprises a receptacle 110 and a gas withdrawal system 120. The receptacle may comprise one or more feedthroughs as described above, wherein one feedthrough 112 is depicted in FIG. 1 for illustrative purposes. The apparatus 100 may comprise any one, some, or all of the features of the apparatus as disclosed herein, unless indicated otherwise or technically inappropriate. The receptacle 110 may comprise any one, some, or all of the features of the receptacle as disclosed herein, unless indicated otherwise or technically inappropriate. The gas withdrawal system 120 may comprise any one, some, or all of the features of the gas withdrawal system as disclosed herein, unless indicated otherwise or technically inappropriate.

The receptacle 110 is configured to receive a battery material M. For example, as shown in FIG. 1, the feedthrough 112 may provide an opening for receiving the battery material M, as also symbolized in FIG. by a dashed arrow M running through the feedthrough 112. As described above, the battery material M may comprise multiple different components, which may be fed into the receptacle 110 via multiple feedthroughs or ports (not shown in the drawings). Accordingly, the receptacle 110 is configured to receive the battery material M. The battery material M may be provided and/or prepared as described above. In FIG. 1, a wavy line is drawn inside the receptacle 110 to symbolize that the inside of the receptacle 110 may be partly filled with the battery material M. At the same time, it is understood that there is no particular limitation regarding a filling volume of the receptacle 110 with the battery material M.

The gas withdrawal system 120 may be provided as a single device or comprise multiple devices that may be combined to a system. As described above, the gas withdrawal system 120 may generally comprise one or both of a vibration device 122 and a negative pressure device 124. In the example shown in FIG. 1, the gas withdrawal system 120 comprises a vibration device 122 and a negative pressure device 124. The vibration device 122 may comprise any one, some, or all of the features of the vibration device as disclosed herein, unless indicated otherwise or technically inappropriate. The negative pressure device 124 may comprise any one, some, or all of the features of the negative pressure device as disclosed herein, unless indicated otherwise or technically inappropriate.

The vibration device 122 is configured to apply vibration V that is symbolized in FIG. 1 as wavelines propagating outward. The vibration device 122 may be configured to subject the receptacle 110 to vibration by applying a mechanical (particularly physical) impact onto the outside of the receptacle, as schematically illustrated by an arrow P in FIG. 1. In other examples not shown in the drawings, the gas withdrawal system 120 may be configured to apply a mechanical impact to (and from) the inside of the receptacle 110.

The negative pressure device 124 may be configured to apply a negative pressure to the inside of the receptacle 110. The negative pressure device 124 may be fluidly coupled to the receptacle 110 so that gas G, particularly from the battery material M received in the receptacle 110, is withdrawn from the receptacle 110. This is schematically symbolized by the dashed arrow G in FIG. 1. The gas withdrawal system 120, particularly either of the vibration device 122 and the negative pressure device 124, contribute to promoting gas G to be withdrawn from the battery material M received in the receptacle 110. The function principle, technical effect and technical advantages are as described above.

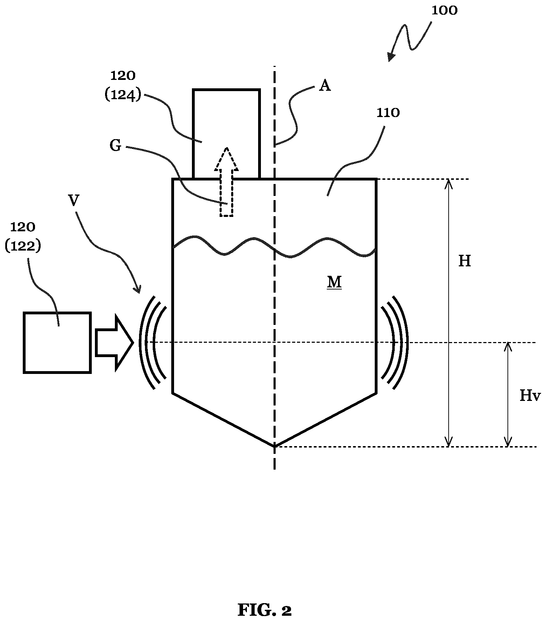

FIG. 2 shows a schematic cross-sectional view of an apparatus 100 according to an example. Components and features of the apparatus 100 of FIG. 2 may correspond to those of the apparatus as generally described above and/or described in connection with FIG. 1, and the corresponding description will not be repeated.

The receptacle 110 as shown in FIG. 2 may have a general cylindrical shape that is axisymmetrical with respect to a symmetry axis A. The receptacle 100 has a total height H that is determined between a lowermost extension and an uppermost extension of the receptacle 110 along the symmetry axis A. The gas withdrawal system 120 is configured to apply vibration to the receptacle 110 by applying a mechanical impact to a lower area of the receptacle 110. As schematically shown in FIG. 2, said lower area of the receptacle may correspond to a height Hv determined from the lowermost extension of the receptacle 110. A ratio of the height Hv to the total height H of the receptacle may be 0 to 50%, or 0 to 30%, or 0 to 15%. It is noted that the depiction in FIG. 2 is illustrative only and not intended to be true to scale.

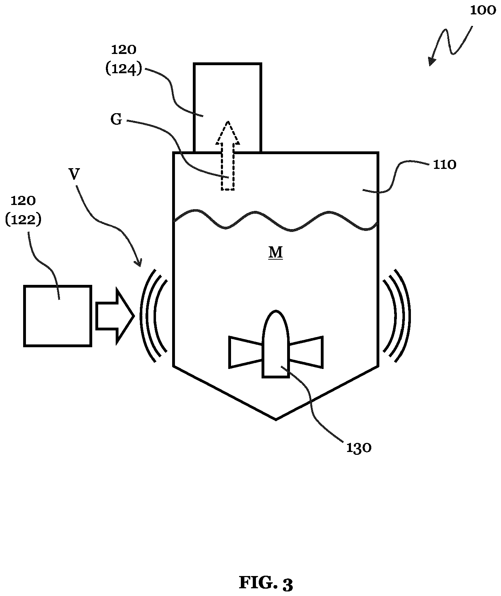

FIG. 3 shows a schematic cross-sectional view of an apparatus 100 according to a further example. Components and features of the apparatus 100 of FIG. 3 may correspond to those of the apparatus as generally described above and/or described in connection with FIG. 1 or 2, and the corresponding description will not be repeated.

The apparatus 100 further comprises a mixing device 130. The mixing device 130 may be configured as describe above. Further, the mixing device 130 may include any one, some, or all of the features of the mixing device as disclosed herein, unless indicated otherwise or technically inappropriate. The mixing device 130 is configured to mix the battery material M received in the receptacle 110. Here, the apparatus 100 is configured to receive and process the battery material M that comprises one or more of an electrode active material, a conductive agent, a binder and a solvent.

The apparatus 100, or the gas withdrawal system 120, may be configured to withdraw gas from the receptacle 110, particularly from the battery material M received in the receptacle 110, while mechanically processing the battery material M, particularly mixing the battery material using the mixing device 130, in the receptacle 110.

Alternatively or additionally, the apparatus 100, or the gas withdrawal system 120, may be configured to withdraw gas from the receptacle 110, particularly from the battery material M received in the receptacle 110, in an intermittent manner while mechanically processing the battery material M, particularly mixing the battery material using the mixing device 130, in the receptacle 110.

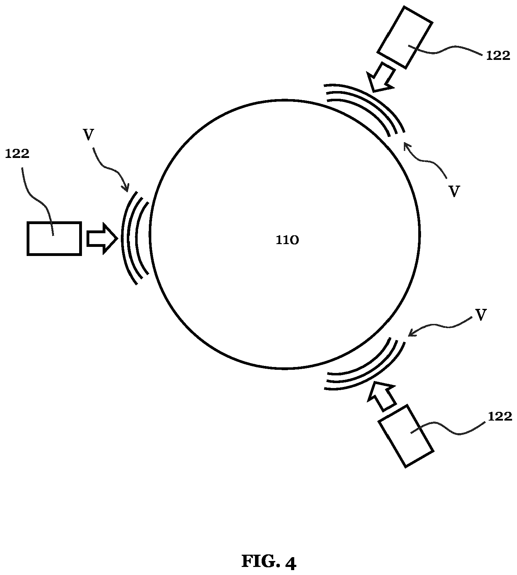

FIG. 4 shows a schematic plan view of an apparatus 100 according to a further example. Components and features of the apparatus 100 of FIG. 4 may correspond to those of the apparatus as generally described above and/or described in connection with FIG. 1, 2 or 3, and the corresponding description will not be repeated.

As mentioned, the receptacle 110 may have a general cylindrical shape, resulting in a circular plan view as shown in FIG. 4. As described above, the apparatus may have one or multiple vibration devices. In the examples shown in FIG. 4, the apparatus 100 has three vibration devices 122 that are arranged separate from one another in an equidistant manner. In the example of the receptacle 110 having a circular cross-section in the plan view (i.e., parallel to the symmetry axis A), the three vibration devices 122 being arranged equidistantly may result in an angle offset of 120° between two vibration devices 122. Each of the vibrations devices 122 as shown in the drawings may include any one, some, or all of the features of the vibration device as described above, unless technically inappropriate or stated otherwise.

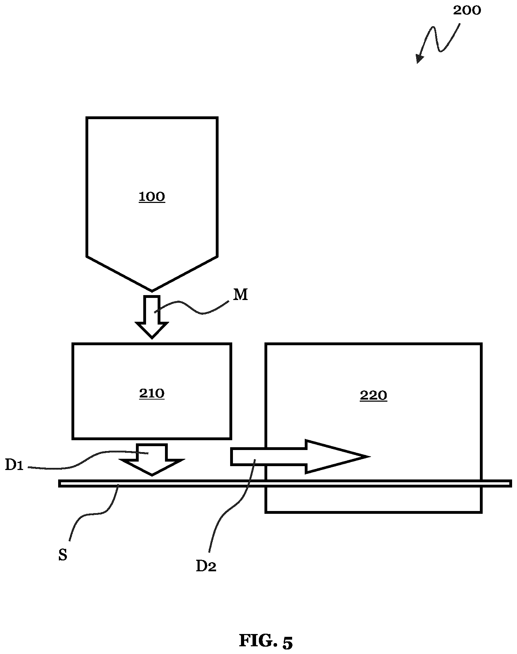

FIG. 5 shows a battery manufacturing system 200 according to an example. The battery manufacturing system 200 may include any one, some, or all of the features of the battery manufacturing system as disclosed herein, unless indicated otherwise or technically inappropriate.

The battery manufacturing system 200 comprises the apparatus 100 as disclosed herein and/or described in connection with any of FIG. 1 to 4. The battery manufacturing system 200 further comprises a deposition unit 210 and a solvent withdrawal unit 220. The deposition unit 210 is configured to deposit the battery material M on a substrate S, as symbolized by arrow D1 in FIG. 5. The substrate S with the battery material M deposited thereon is conveyed to the solvent withdrawal unit 220, as symbolized by arrow D2 in FIG. 5. The solvent withdrawal unit 220 is configured to withdraw the solvent from the battery material M deposited on the substrate S in a manner described herein. The substrate S may be as described herein, and may refer to a metal sheet to be used as a current collector of an electrode of a battery.

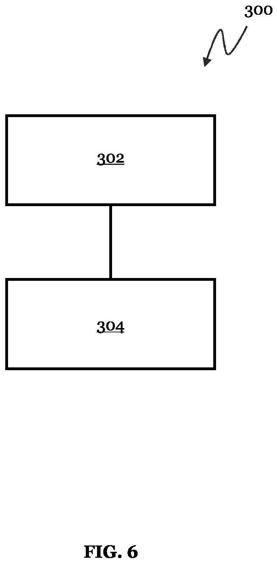

FIG. 6 shows a flow diagram of a battery manufacturing method 300 according to an example. The method 300 comprises receiving 302 a battery material in a receptacle. The method 300 further comprises withdrawing 304 gas from the battery material received in the receptacle by subjecting the receptacle to vibration and/or by applying a negative pressure to the receptacle.

The battery manufacturing method 300 may include any one, some, or all of the features of the battery manufacturing method as disclosed herein. In some examples, the method step 304 may be performed while mechanically processing the battery material in the receptacle. In other examples, the method step 304 may be performed intermittently while mechanically processing the battery material in the receptacle.

The battery manufacturing method 300 may be performed using the apparatus as disclosed herein, and/or using the battery manufacturing system as disclosed herein. Furthermore, any one, some, or all of the features related to the apparatus as disclosed herein and the battery manufacturing system as disclosed herein may also be implemented for the battery manufacturing method 300, unless technically inappropriate.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. An apparatus (100), comprising
a receptacle (110) configured to receive a battery material (M); and
a gas withdrawal system (120) configured to withdraw gas (G) from the battery material (M).

2. The apparatus (100) of claim 1,
wherein the gas withdrawal system (120) is configured to apply vibration to the receptacle (110) by applying a mechanical impact to a lower area of the receptacle.

3. The apparatus (100) of claim 1 or 2,
wherein the gas withdrawal system (120) is configured to apply vibration to the receptacle (110) by applying a mechanical impact to multiple distinct spots at the receptacle.

4. The apparatus (100) of any one of the preceding claims,
wherein the gas withdrawal system (120) comprises a vibration device (122) configured to subject the receptacle (110) to vibration.

5. The apparatus (100) of any one of the preceding claims,
wherein the gas withdrawal system (120) or the vibration device (122) comprises one striking element or multiple striking elements to physically and mechanically strike against the receptacle (110), thereby applying said vibration to the receptacle (110).

6. The apparatus (100) of any one of the preceding claims,
wherein the gas withdrawal system (120) is configured to apply vibration to the receptacle (110) at a frequency of 10 to 10.000 Hz.

7. The apparatus (100) of any one of the preceding claims,
wherein the gas withdrawal system (120) comprises a negative pressure device (124) configured to apply a negative pressure to an inside of the receptacle (110).

8. The apparatus (100) of claim 7,
wherein the negative pressure device (122) comprises a vacuum pump fluidly coupled to the receptacle (110), wherein the vacuum pump is configured to generate a negative pressure relative to the inside of the receptacle.

9. The apparatus (100) of any one of the preceding claims, further comprising:
a mixing device (130) configured to mix the battery material (M) received in the receptacle (110),
wherein the apparatus is configured to receive and process the battery material (M) that comprises one or more of an electrode active material, a conductive agent, a binder and a solvent.

10. A battery manufacturing system, comprising:
the apparatus (100) of any one of the preceding claims;
a deposition unit (210) configured to deposit the battery material (M) on a substrate (S); and
a solvent withdrawal unit (220) configured to withdraw the solvent from the battery material (M) deposited on the substrate (S).

11. A battery manufacturing method (300), comprising:
receiving (302) a battery material (M) in a receptacle (110); and
withdrawing (304) gas (G) from the battery material (M) received in the receptacle (110) by subjecting the receptacle (110) to vibration and/or by applying a negative pressure to the receptacle (110).

12. The method of claim 11, wherein the withdrawing the gas from the battery material (M) is performed:
while mechanically processing the battery material (M) in the receptacle (110); and/or
intermittently while mechanically processing the battery material (M) in the receptacle (110).

13. The method (300) of claim 11 or 12, performed using the apparatus (100) of any one of claims 1 to 9 or the battery manufacturing system (200) of claim 10.

14. A battery electrode obtainable by the method (300) according to claim 12 or 13.

15. A battery comprising a battery electrode according to claim 14.
